# EUROPÄISCHE PATENTSCHRIFT

(11) **EP 1 136 394 B1**
(45) Veröffentlichungstag und Bekanntmachung des Hinweises auf die Patenterteilung: **02.01.2004**
(21) Anmeldenummer: 01101539.3
(22) Anmeldetag: 24.01.2001
(51) Int. Cl.: B65G 1/137, B66F 9/06

(54) **Kommissioniervorrichtung**
Device for order picking
Dispositif pour la composition de commandes

(30) Priorität: 17.03.2000 DE 10013214
(43) Veröffentlichungstag der Anmeldung: 26.09.2001
(73) Patentinhaber: WITRON Logistik & Informatik GmbH, 92711 Parkstein (DE)
(72) Erfinder: Winkler, Walter, 92711 Parkstein (DE)
(74) Vertreter: Betten & Resch

(56) Entgegenhaltungen:
- EP-A- 0 773 187
- WO-A-99/11558
- DE-U- 9 404 044
- GB-A- 1 049 811
- GB-A- 1 103 603

## Beschreibung

Die Erfindung betrifft eine Vorrichtung zum Kommissionieren von auf Entnahmepaletten in einem Palettenregal befindlichen Artikeln.

Aus der europäischen Patentanmeldung EP 773 187 A2 ist ein Kommissionierfahrzeug für Palettenregale bekannt, das eine erste Hubvorrichtung zum Anheben und Absenken einer Plattform aufweist, auf der ein Arbeitsplatz für einen Kommissionierer vorgesehen ist sowie eine zweite Hubvorrichtung zum Anheben und Absenken von auf einer Palette gelagerten Artikeln relativ zu der Plattform. Da die zweite Hubvorrichtung für die auf der Plattform geladenen Artikel nicht weiter als bis zur Plattformebene abgesenkt werden kann, tritt bei hohen oder tiefen Artikelstapeln bzw. bei vergleichsweise kleinen Kommissionierern eine ergonomisch ungünstige Belade- bzw. Entladeposition auf.

Aus dem britischen Patent GB 1,103,603 ist ein Gabelstapler mit einer Hubplattform bekannt, an welche Hubplattform mit dieser und relativ zu dieser verfahrbare Gabelpaare angebracht sind, die sich sowohl längst als auch senkrecht zur Fahrtrichtung des Gabelstaplers erstrecken.

Der Erfindung liegt die Aufgabe zugrunde, eine solche Vorrichtung zu schaffen, bei der der Kommissioniervorgang für den Picker erleichtert und insgesamt ergonomischer und effektiver gestaltet werden kann.

Diese Aufgabe wird erfindungsgemäß durch ein entlang der Pickfront des Palettenregals verfahrbares Fahrzeug gelöst mit einer ersten Hubeinrichtung mit einer höhenverstellbaren Picker-Trageinrichtung für den Picker und mit einer zweiten Hubeinrichtung mit einer höhenverstellbaren Paletten-Trageinrichtung für eine Auftragspalette, wobei die Picker-Trageinrichtung und die Paletten-Trageinrichtung relativ zur jeweiligen Entnahmeposition unabhängig voneinander in ihrer Höhe positionierbar sind und erste und zweite Hubeinrichtung separat voneinander an einer in Vertikalrichtung fixen Basis des Fahrzeugs angebracht sind.

Der auf der Picker-Trageinrichtung befindliche Picker (Kommissionierer) kann somit mittels des Fahrzeuges in der Pickfront verfahren werden. Die beiden unabhängig voneinander arbeitenden Hubeinrichtungen des Fahrzeuges ermöglichen es, die jeweils ergonomisch günstigste Entnahme- und Abgabehöhe einerseits für die Picker-Trageinrichtung und andererseits für die Paletten-Trageinrichtung zu erreichen. Hierdurch können Belastungen des Pickers durch suboptimale Entnahme- und Abgabehöhen vermieden werden. Durch das automatische Anfahren der Entnahmepositionen entfallen für den Picker Gehwege in der Kommissionierung, was zu einer wesentlichen Reduzierung der Wegzeiten führt und den Kommissioniervorgang effektiver gestaltet. Bedingt durch die vorzugsweise vorgesehene Rechnersteuerung der Vorrichtung entfallen auch diejenigen Zeiten, die der Picker in herkömmlichen Systemen benötigt, um die nächste Entnahmeposition zu finden (Orientierung zum nächsten Fach).

In vorteilhafter Weiterbildung der Erfindung umfasst die Picker-Trageinrichtung eine Kabine für den Picker. Sie ist vorzugsweise mit einer umlaufenden Absturzsicherung für den Picker versehen. Zweckmäßigerweise ist als zusätzliche Sicherheitseinrichtung ein Totmann-Schalter vorgesehen, der gleichzeitig zur Quittierung der Kommissionierung verwendet werden kann.

Die Paletten-Trageinrichtung weist in bevorzugter Weiterbildung der Erfindung ein Lastaufnahmemittel zum Aufnehmen und Abgeben einer Auftragspalette auf. Das Lastaufnahmemittel ist zweckmäßigerweise so ausgebildet, dass ein Transport der Auftragspalette quer zur Verfahrrichtung des Wagens ermöglicht wird.

In besonders bevorzugter Weiterbildung der Erfindung weist die Paletten-Trageinrichtung eine Sensoreinrichtung zum Ermitteln des Füllgrades der Auftragspalette auf, wodurch es ermöglicht wird, die Höhe der Paletten-Trageinrichtung an den Füllgrad der Auftragspalette anzupassen.

Die erfindungsgemäße Kommissioniervorrichtung wird in der Pickfront ähnlich einem Regalfahrzeug auf Schienen geführt und von einem Steuerrechner gesteuert. Das Fahrzeug wird entsprechend der Picksteuerung zur jeweiligen Entnahmeposition vor der jeweils aktuellen Entnahmepalette in Längsrichtung positioniert und, vorzugsweise gleichzeitig, werden sowohl der Picker als auch die Auftragspalette in der Höhe optimal positioniert. Der Picker kann sodann die am Terminal angezeigte Menge von der Entnahmepalette entnehmen und auf die Auftragspalette umschlichten. Die erfindungsgemäße Kommissioniervorrichtung wird sodann an die nächste relevante Entnahmeposition gesteuert oder zu einem Übergabeplatz oder Pufferplatz verfahren.

In bevorzugter Weiterbildung der Erfindung ist vorgesehen, dass die Höhe der Picker-Trageinrichtung an der jeweiligen Entnahmeposition auf der Basis der Restbestandsmenge der Artikel auf der Entnahmepalette steuerbar ist. Weiterhin ist vorgesehen, dass die Höhe der Paletten-Trageinrichtung an der jeweiligen Entnahmeposition auf der Basis des Füllgrades der Auftragspalette steuerbar ist. Auf diese Weise läßt sich eine ergonomisch optimale Entnahme- und Abgabehöhe von Picker-Trageinrichtung und Paletten-Trageinrichtung zu jedem Zeitpunkt des Kommissionierens erreichen, wodurch die körperlichen Belastungen des Pickers auf ein Minimum reduziert werden; insbesondere erfolgt keine Belastung der Wirbelsäule des Pickers beim Pickvorgang.

Zusätzlich ist zweckmäßigerweise vorgesehen, dass die Höhe der Picker-Trageinrichtung und/oder der Paletten-Trageinrichtung an der jeweiligen Entnahmeposition für jeden Picker individuell einstellbar ist, d. h., die optimale Zugriffshöhe kann in der Steuerung individuell auf jeden Mitarbeiter ausgerichtet werden. Darüberhinaus ist zweckmäßigerweise vorgesehen, dass die von der Steuerung vorgegebenen Höhen vom Picker manuell nachkorrigierbar sind. Demgegenüber erfolgt die Fahrsteuerung in Gassenrichtung vorzugsweise vollautomatisch ohne Eingriffsmöglichkeit für den Picker.

Weitere vorteilhafte Merkmale der Erfindung ergeben sich aus den übrigen Unteransprüchen sowie aus der nachfolgenden Beschreibung, in der ein bevorzugtes Ausführungsbeispiel der Erfindung anhand der Zeichnung näher beschrieben ist. In der Zeichnung zeigen in schematischer bzw. halbschematischer Darstellung:
- Fig. 1: eine Seitenansicht einer erfindungsgemäßen Vorrichtung,
- Fig. 2: eine perspektivische Ansicht der Vorrichtung gemäß Fig. 1,
- Fig. 3: eine Seitenansicht eines Teils einer Kommissionieranlage, in der mehrere erfindungsgemäße Vorrichtungen zum Einsatz kommen,
- Fig. 4: eine Draufsicht auf die Anlage gemäß Fig. 3, und
- Fig. 5a, 5b, 6a, 6b, 7a, 7b, 8a, 8b, 9a, 9b, 10a, 10b, 11a, 11b und 12a, 12b: Frontansichten bzw. Seitenansichten der erfindungsgemäßen Vorrichtung, die unterschiedliche Niveaubeispiele für die Picker-Trageinrichtung und die Paletten-Trageinrichtung darstellen.

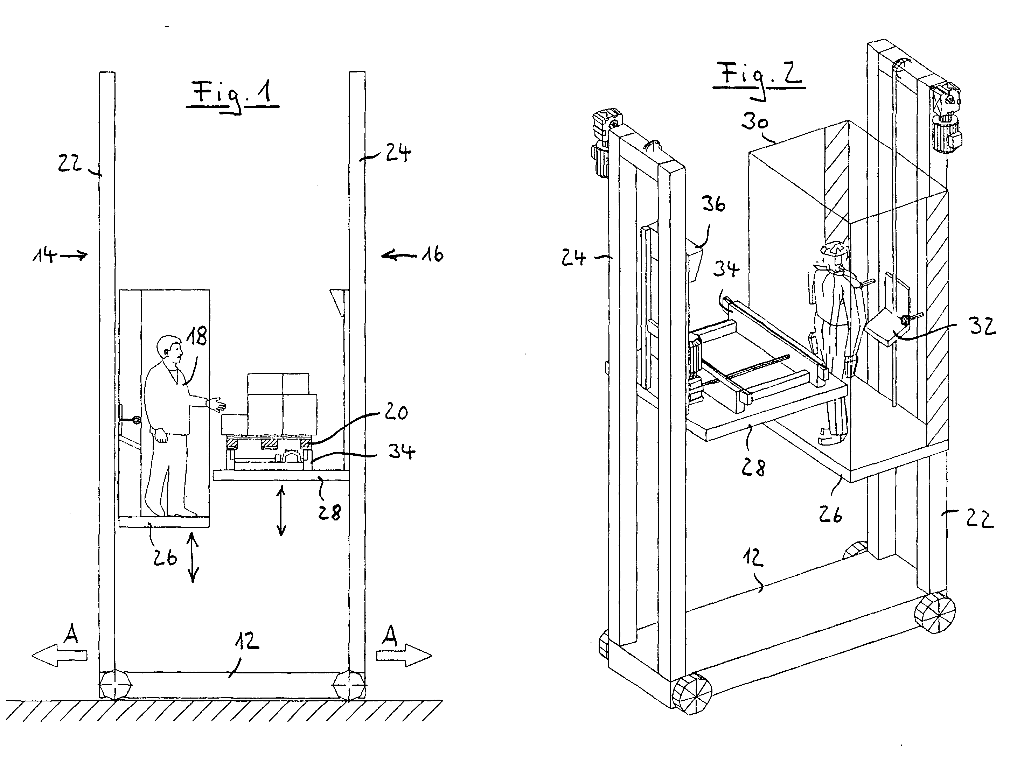

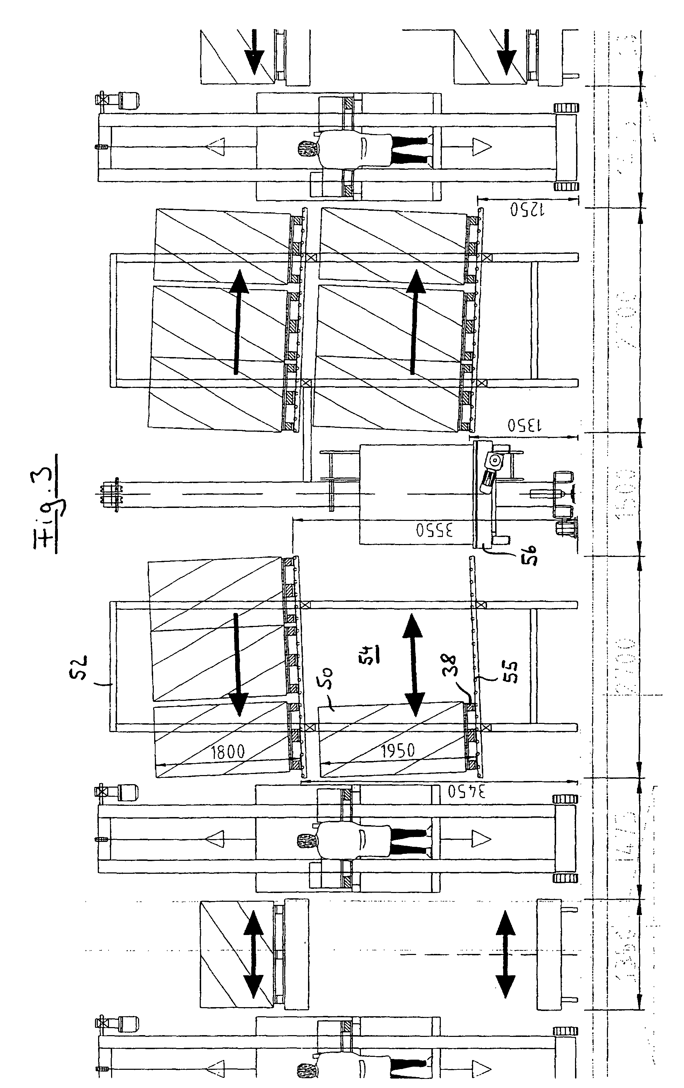

Zunächst wird auf die Fig. 1 und 2 Bezug genommen.

Die erfindungsgemäße Vorrichtung, im folgenden auch "Ergonomie-Picking-Mobil" oder kurz "EPM" genannt, ist in den Figuren insgesamt mit der Bezugsziffer 10 bezeichnet. Es ist ein schienengebundenes Fahrzeug, welches ein Fahrwerk 12 mit Fahrantrieb aufweist, wobei die Fahrtrichtung des EPM in Fig. 1 durch die Pfeile A angedeutet ist und parallel zur Pickfront der (in Fig. 1 und 2 nicht dargestellten) Palettenregale verläuft. Das EPM umfasst eine erst Hubeinrichtung 14 für den Picker 18 und eine zweite Hubeinrichtung 16 für eine Auftragspalette 20. Jede Hubeinrichtung 14, 16 umfasst einen Rahmen 22 bzw. 24, der am in Verfahrrichtung des EPM gesehen vorderen bzw. hinteren Ende des Fahrwerks 12 sich senkrecht nach oben erstreckend befestigt ist und an dem jeweils eine Plattform 26 bzw. 28 höhenverstellbar geführt ist. Die beiden Plattformen 26, 28 sind, in Draufsicht, benachbart, unter Freilassung lediglich eines vergleichsweise schmalen Spalts, und sie sind mittels der jeweils zugeordneten Hubeinrichtungen 14 bzs. 16 unabhängig voneinander in ihrer Höhe einstellbar derart, dass die Höhe beispielsweise der Plattform 28 höher, gleich hoch oder tiefer liegen kann als die Höhe der Plattform 26.

Die zur Aufnahme des Pickers 18 dienende Plattform 26 ist mit einer Kabine mit umlaufender Absturzsicherung 30, einem Fahrersitz und einem integrierten Totmann-Schalter 32 ausgerüstet. Der Fahrersitz ist als Steh-Sitz für eine ergonomische Position während der Fahrt ausgebildet. Weitere, nicht näher dargestellte Sicherheitsausrüstungen sind ebenfalls vorgesehen wie z. B. Mittel, die verhindern, dass sich das Fahrzeug in Bewegung setzt, wenn der Picker noch außerhalb des Fahrzeugs hantiert (z. B. Umschlichten der Palette), nachdem der Pick quittiert wurde, oder die Quetschungen durch die Relativbewegung der Auftragspalette gegenüber der Plattform verhindern. Der Totmann-Schalter 32 dient gleichzeitig zur Quittierung der Kommissionierung.

Auf der Plattform 28 ist ein Lastaufnahmemittel 34 für die Auftragspalette 20 angeordnet, wobei das Lastaufnahmemittel 34 eine Bewegung der Auftragspalette 20 quer zur Verfahrrichtung A des EPM ermöglicht. Weiterhin trägt die Plattform 28 ein Terminal 36 zur Anzeige der Pickpositionen.

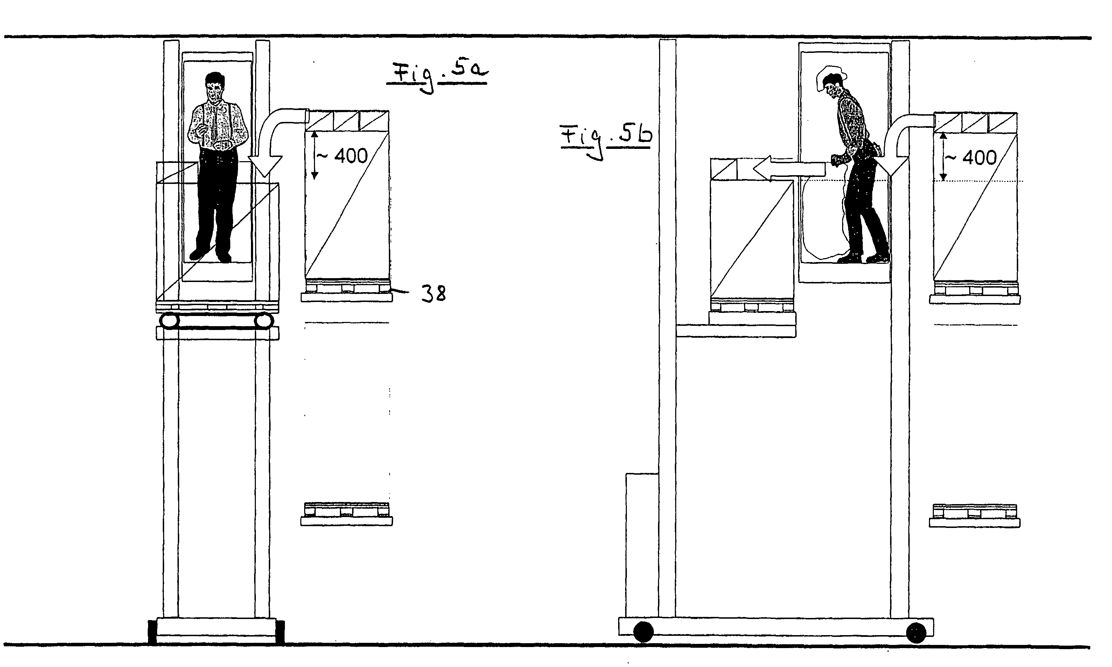

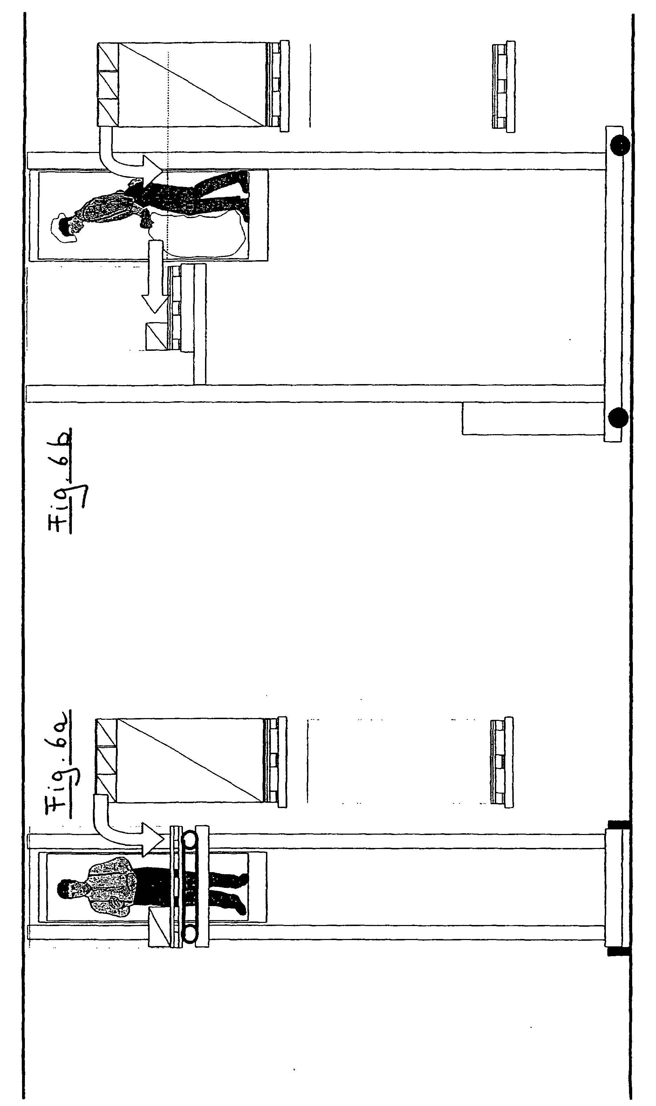

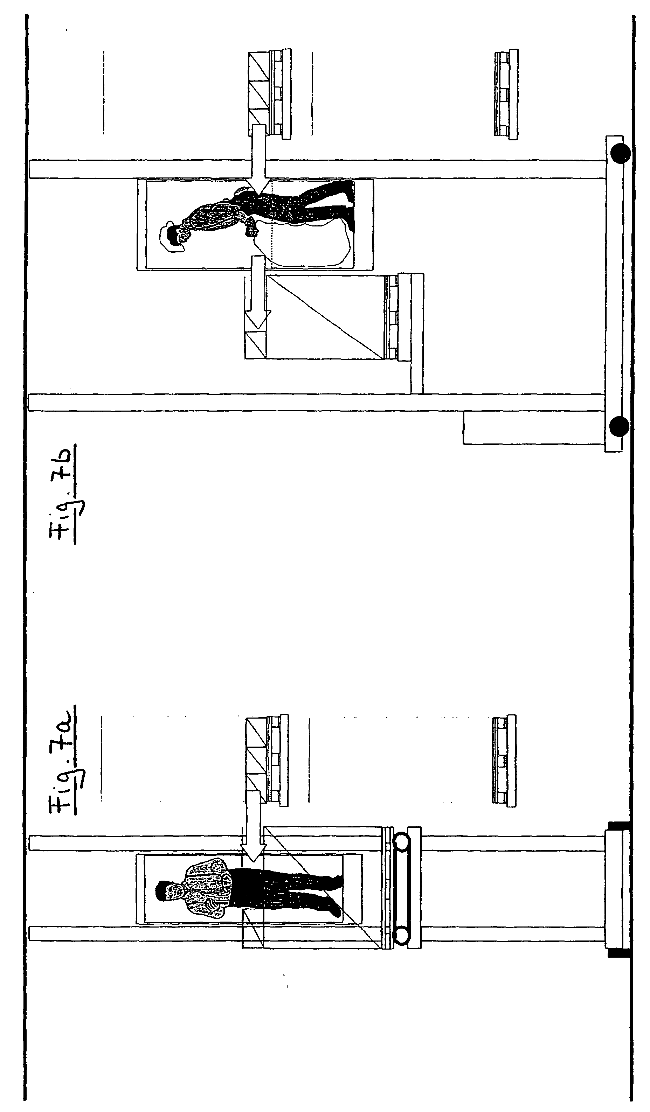

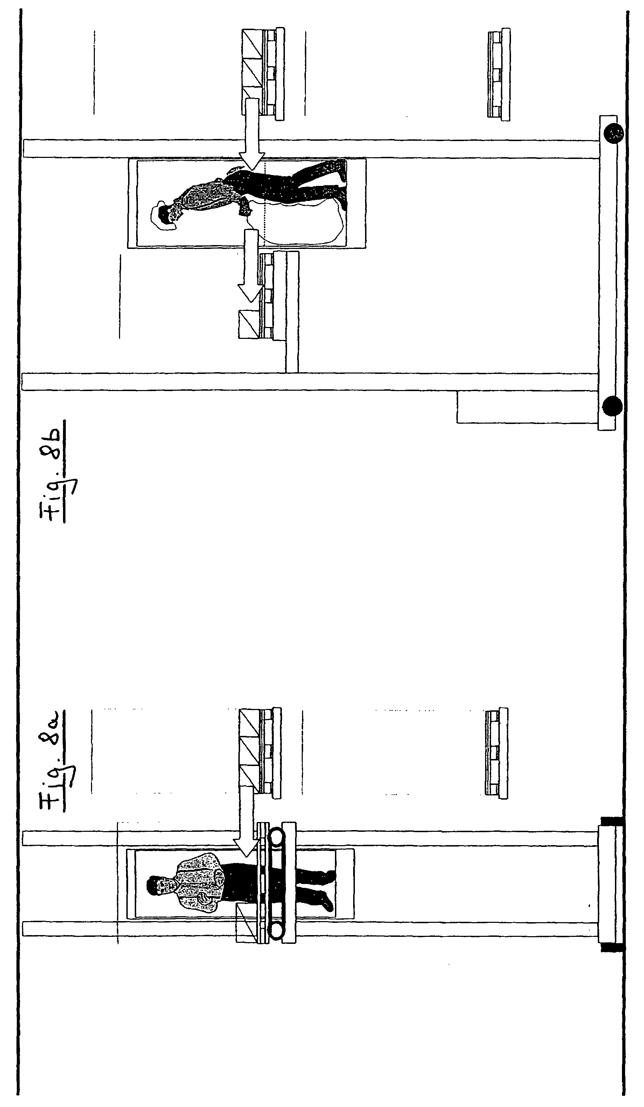

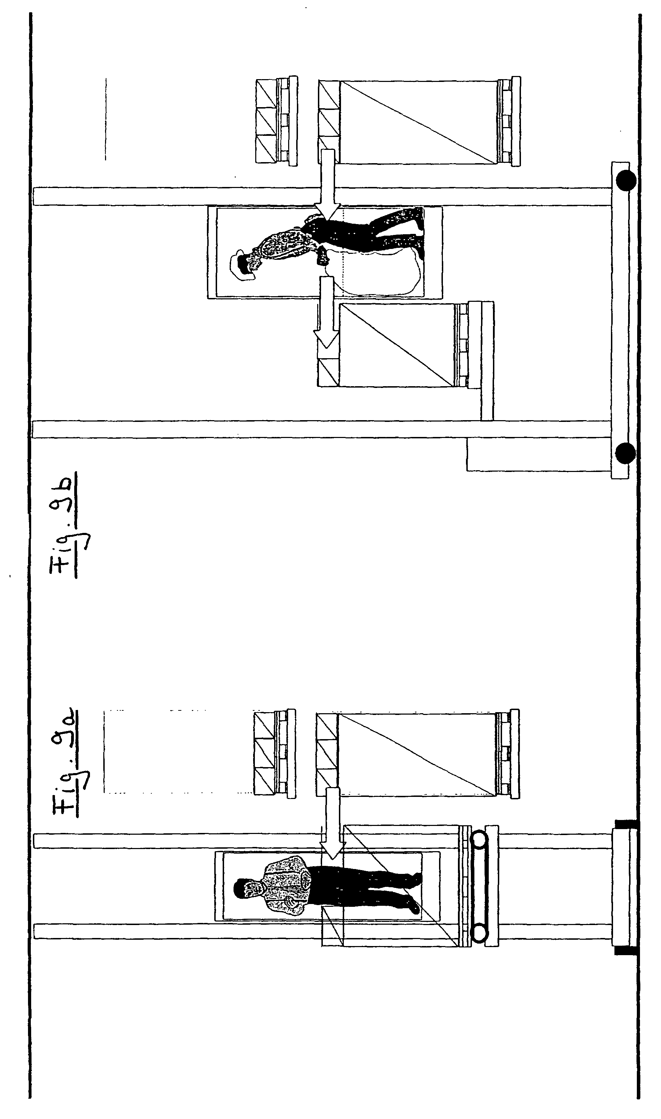

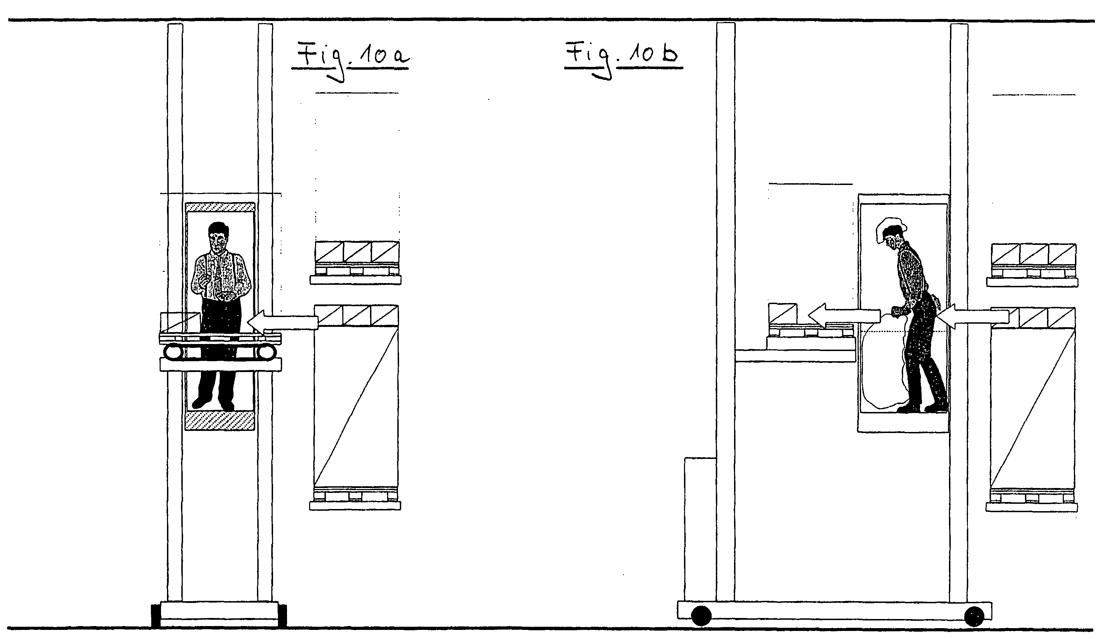

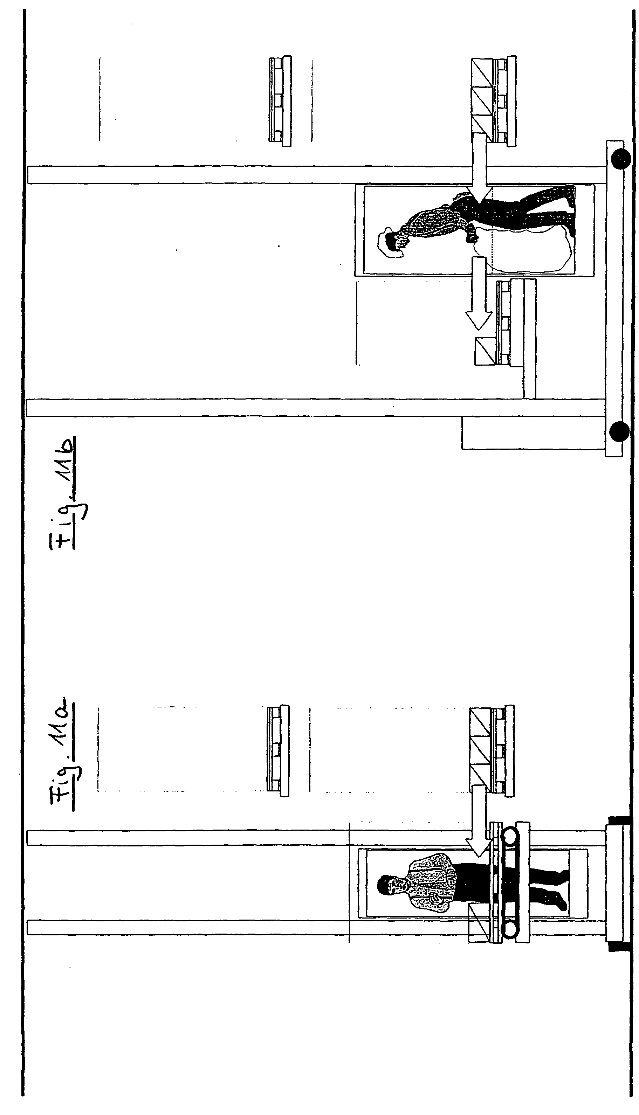

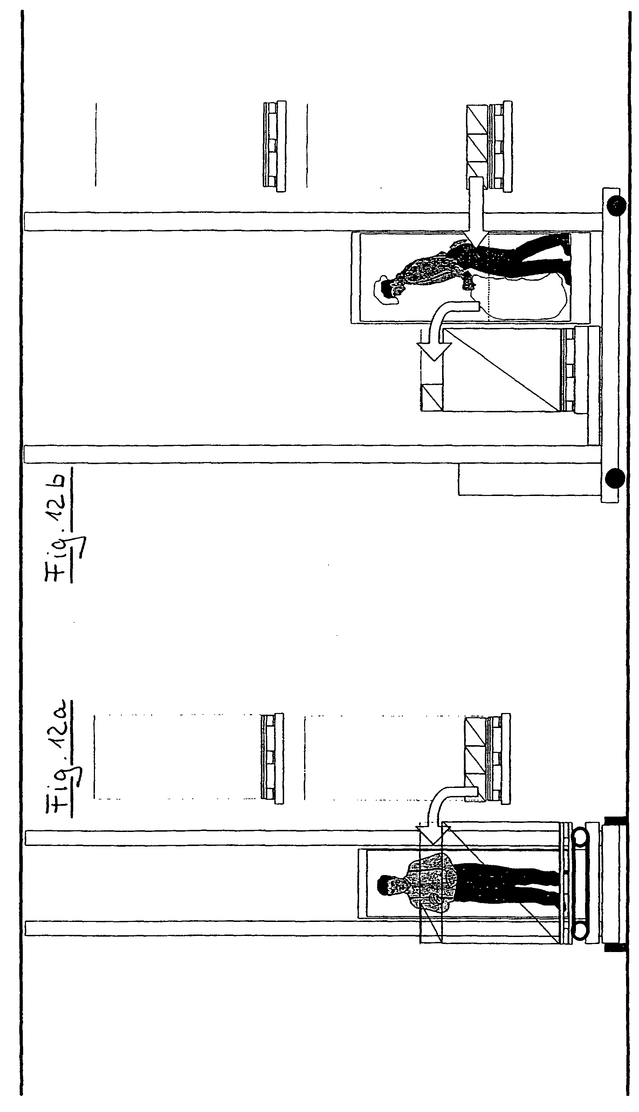

Das EMP wird von einem Rechnersystem angesteuert, welches einerseits das Fahrzeug positioniert und andererseits sowohl den Picker als auch die Auftragspaletten an der jeweiligen Entnahmeposition der im Palettenregal befindlichen Entnahmepalette in der ergonomisch jeweils günstigsten Position positioniert. Beispiele hierfür sind in den Fig. 5a bis 12b gezeigt.

Die Einstellung der Kommissionierplattform auf eine ergonomische Höhe erfolgt auf der Basis der Restbestandsmenge auf der Entnahmepalette 38 (Verwaltung über den Rechner). Die Einstellung der Höhe der die Auftragspalette 20 tragenden Plattform 28 erfolgt auf der Basis des Füllgrads der Auftragspalette durch Auswertung einer an der Plattform 28 angeordneten Sensortechnik. Die optimale Zugriffshöhe kann hierbei in der Steuerung auch individuell auf den jeweiligen Picker ausgerichtet werden. Der Picker hat darüber hinaus noch die Möglichkeit, die von der Steuerung voreingestellten Höhen manuell nach zu korrigieren. Die Fahrsteuerung in Gassenrichtung erfolgt hingegen vollautomatisch ohne Eingriffsmöglichkeit für den Picker.

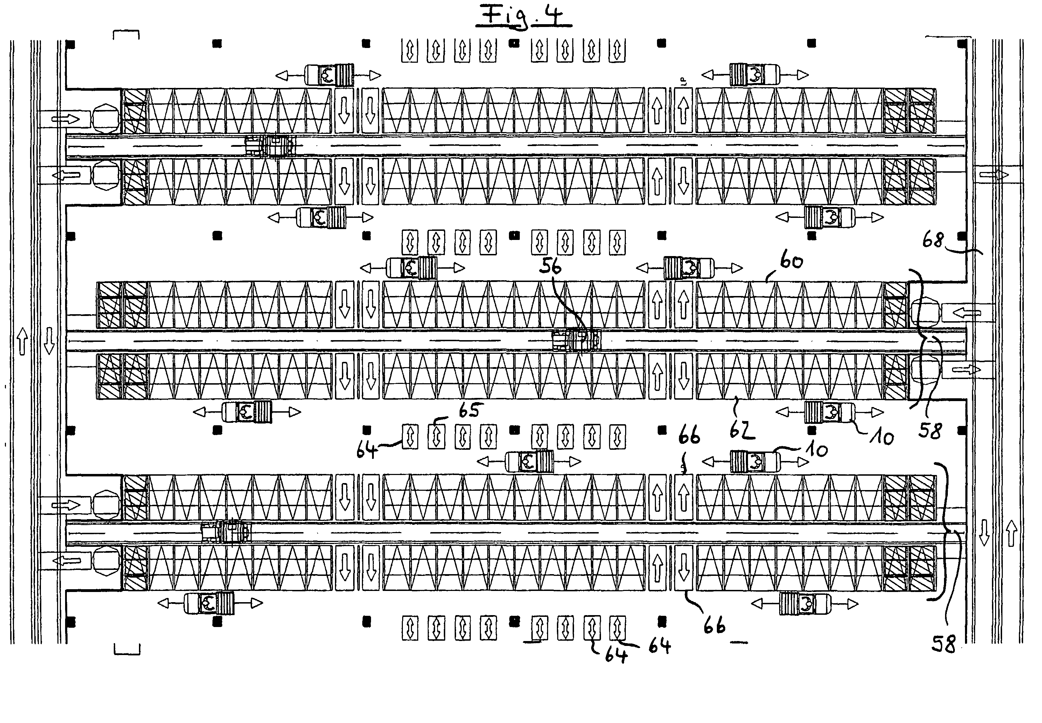

Es wird nun auf die Fig. 3 und 4 Bezug genommen, um die Einbindung des erfindungsgemäßen EPM in das Gesamtsystem zu verdeutlichen.

Die Anlage gemäß Fig. 3 und 4 ist ein System für die integrierte Lagerung und Kommissionierung von Paletten. Die Lagerung der Paletten 50 erfolgt im Falle des vorliegenden Ausführungsbeispiels in zweistöckigen Palettenregalen 52, in denen die Paletten quer und dreifach tief gelagert werden. Für die Kommissionierung werden die Artikel in Kanälen 54 auf mindestens einer Ebene bereit gestellt, wobei jeder Kanal drei Paletten hintereinander aufnehmen kann. Wie dargestellt, sind zwei Kommissionierebenen übereinander eingerichtet.

Die Einlagerung der Paletten in den Vorratsbereich und der Nachschub der Paletten in die Kanäle erfolgt mittels eines automatischen Regalbediengeräts 56. Der Bestand und die Kommissionierung sind in einem einzigen System integriert, was kurze Servicezeiten gewährleistet.

Die Bereitstellung der Artikel in der Kommissionierung kann in statischen und/oder dynamischen Kanälen erfolgen. Artikeln mit hohem Absatz werden feste Bereitstellplätze in der Kommissionierung zugeordnet (statische Aufstellung). In den statischen Kanälen werden immer bis zu drei Paletten des jeweiligen Artikels hintereinander bereit gestellt. Vor der vorderen Palette wird kommissioniert, die hinteren Paletten stehen als Vorrat bereit. Wenn die vordere Palette leer ist, wird die Palette vom Picker mittels des EPM entnommen und die Nachschubpaletten rollen automatisch über die Schwerkraftrollenbahnen 55 der Kanäle nach vorne. Durch die Nulldurchgangsquittierung des Pickers wird die Bereitstellung einer neuen Palette aus dem Vorratsbereich angestoßen.

Artikel mit geringem Absatz können zur Reduzierung der Pickfront dynamisch, d. h. nur bei aktuellem Bedarf, in der Kommissionierung aufgestellt werden. Hierfür sind bestimmte Kanäle definiert, auf denen dynamisch Artikel bereit gestellt werden. Wenn die Anforderung von der Kommissionierung für einen dynamischen Artikel vorliegt, wird dieser auf dem dynamischen Platz aufgestellt und bei der Anforderung eines neuen Artikels wieder entnommen und in den Vorratsbereich zurückgestellt.

Alle Kommissionierkanäle der vorliegenden Anlage können so ausgerüstet werden, dass sie sowohl für die statische als auch für die dynamische Bereitstellung genutzt werden können.

Jeweils zwei Regalzeilen 60, 62 bilden ein Modul 58, an dessen beiden Pickfronten die Picker Auftragspaletten kommissionieren.

Für die Kommissionierung werden die erfindungsgemäßen, oben näher beschriebenen Ergonomie-Picking-Mobile 10 eingesetzt, auf denen die Mitarbeiter in der Pickfront eines Moduls die Auftragspositionen für einen Auftrag picken und die Auftragspalette dann weiter geben. Die Auftragspaletten werden durch die EPMs sukzessive durch die Pickfronten geschleust, in denen Artikel für die Auftragspalette aufgestellt sind. Werden in einer Pickfront mehrere EPMs eingesetzt, kann die Palette auf einem der Pufferplätze 64 abgestellt und vom nächsten EPM übernommen werden. Zum Wechsel zwischen zwei gegenüber liegenden Pickfronten kann die Palette ebenfalls auf Pufferplätzen zwischen den Pickfronten abgestellt und von einem EPM der anderen Pickfront übernommen werden. Der Wechsel auf die andere Seite eines Moduls erfolgt über in den Regalen 52 ausgebildete Pufferbahnen 66 sowie über das jeweilige Regalbediengerät 56 des zugeordneten Moduls 58. Sollen mehrere Pickfronten übersprungen werden, so kann die Palette über das Fördertechnik-Netzwerk 68 in das nächste relevante Modul weiter geschleust werden. Die Pufferplätze können auch als definierte Funktionsplätze für z. B. Abfall eingerichtet werden.

Zum Picken der Auftragspositionen wird eine Teilauftragspalette 20 vom Regalbediengerät 56 auf einer Pufferbahn 66 im Palettenregal 52 für die Übernahme durch ein EPM 10 bereit gestellt. Bei Auftragsstart wird eine Leerpalette direkt aus einem Leerpalettenspender 65 vom EPM 10 abgeholt. Die Palette wird mit dem Lastaufnahmemittel 34 des EPM aufgenommen und die erste Entnahmeposition automatisch angefahren. In der Pickfront sind die Entnahmepaletten 38 bereit gestellt. Die Positionierung der EPM in der Pickfront vor der Entnahmepalette erfolgt vollautomatisch durch den Steuerrechner sowohl in x-Richtung als auch in y-Richtung. Für die Steuerung der eigentlichen Kommissionierung ist auf dem EPM das Terminal 36 angebracht, auf dem Entnahmeposition und Entnahmemenge angezeigt werden. Nach der Positionierung vor dem jeweiligen Kanal 54 kann der Picker die Entnahmeposition überprüfen und er entnimmt dann die angezeigte Menge und schlichtet die Teile auf die Auftragspalette 20 um. Für diesen Vorgang wird die Plattform 26 des Pickers so eingestellt, dass sich für den Picker eine ergonomische Abnahmehöhe von der Entnahmepalette ergibt. Die Auftragspalette wird in der Höhe so eingestellt, dass die entnommenen Teile möglichst ohne Anheben oder Absenken durch den Picker auf die Auftragspalette übergeschoben werden können. Nach dem Umschlichten quittiert der Picker die Entnahmeposition. Das EPM positioniert sich automatisch vor der nächsten Entnahmepalette oder übergibt die Auftragspalette an einen Pufferplatz 64 (Teilauftragspalette) oder auf einen Pufferplatz 62 (Teilauftragspalette oder fertig kommissionierte Palette). Die Pufferplätze ermöglichen innerhalb des Systems eine zeitliche "Überholung" der Paletten, wodurch optimierte Auftragsdurchlaufzeiten erreicht werden.

Je Pickfront arbeitet ein Picker auf je einem EPM, es können aber auch zwei EPMs in einer Pickfront eingesetzt werden. Bei zwei EPMs in einer Pickfront können sich die Arbeitsbereiche der einzelnen EPMs überlappen. Die Steuerung für die Auftragspalette berücksichtigt eine Wegoptimierung für den Picker und ermöglicht somit eine maximalen Kommissionierleistung. Nach Abschluss der Kommissionierung im Arbeitsbereich des jeweiligen EPM wird die Auftragspalette zur Weiterleitung in anderen Bereichen auf einem Pufferplatz abgestellt. Theoretisch können auch mehrere EPMs übereinander eingesetzt werden. Dies kann bei bestimmten Randbedingungen von Artikelmenge und Kommissionierleistung bei Minimierung der Grundfläche vorteilhaft sein.

Nach dem letzten Pick wird die Auftragspalette 20 über eine Pufferbahn 62 an ein Regalbediengerät 56 übergeben und von diesem auf eine geeignete Fördertechnik abgestellt und in einen Versandbereich gefahren, wo eine Sortierung der Auftragspaletten zu Aufträgen und gegebenenfalls Touren erfolgt.

Ein Fahren der EPMs mit voll ausgefahrenem Hub ist problemlos möglich und eine kombinierte Hub-/Fahrbewegung ist mit dem EPM realisierbar. Damit erfolgt die Höhenpositionierung im wesentlichen schon während der eigentlichen Fahrzeit und nimmt damit keine zusätzliche Zeit in Anspruch. Durch das ständige Mitführen der Auftragspalette mit dem Kommissionierer entfallen jegliche Wegzeiten von der Entnahmepalette zur Auftragspalette. Die komplette Energieübertragung zum EPM erfolgt mittels Schleifleitung, was gegenüber herkömmlichen Kommissioniergeräten zu einer Einsparung der Antriebsbatterie führt. Die Datenübertragung erfolgt über Datenlichtschranken. Die Ansteuerung und Energieübertragung der Pufferplätze erfolgt mittels "unterbrochener" Schleifleitung vom Fahrzeug aus.

Wie sich aus dem vorstehenden ergibt, weist die erfindungsgemäße Vorrichtung insbesondere folgende Vorteile auf:
- Pickposition wird automatisch angefahren
- automatische Positionierung vor dem jeweiligen Kanal
- optimale ergonomische Entnahmehöhe an jeder Entnahmepalette
- optimale ergonomische Abgabehöhe an jeder Auftragspalette
- unabhängiger Hub für Picker-Kabine auf Auftragspalette
- keine Wartezeiten für den Picker
- keine Laufwege in der Kommissionierung
- Mitführen der Auftragspalette, daher keine Wegzeiten zur Auftragspalette
- Auf- und Abgeben der Paletten mittels Förderer
- schwere Teile werden ohne Hubbewegung des Pickers von der Entnahmepalette auf den Rollentisch auf- und auf die Auftragspalette abgeschoben; keine Belastung der Wirbelsäule durch den Pickvorgang
- hohe Kommissionierleistung durch mechanischen Transport des Pickers und der Auftragspalette auf dem EPM und ergonomischen, papierlosen Kommissionierablauf
- besonders geeignet für schwere und großvolumige Artikel sowie Großmengen-Picks
- variabler Einsatz von einem oder zwei EPMs in einem Gang
- Überlappen der Arbeitsbereiche zweier EPMs möglich
- gleichzeitiger Start von Auftragspaletten an verschiedenen EPMs

### Bezugszeichenliste

- 10: Fahrzeug
- 12: Fahrwerk
- 14: erste Hubeinrichtung
- 16: zweite Hubeinrichtung
- 18: Picker
- 20: Auftragspalette
- 22: Rahmen
- 24: Rahmen
- 26: Plattform
- 28: Plattform
- 30: Kabine mit Absturzsicherung
- 32: Totmann-Schalter
- 34: Lastaufnahmemittel
- 36: Terminal
- 38: Entnahmepalette
- 50: Paletten
- 52: Palettenregale
- 54: Kanäle
- 55: Schwerkraftrollenbahnen
- 56: Regalbediengerät
- 58: Module
- 60: Regalzeile
- 62: Regalzeile
- 64: Pufferplätze
- 65: Leerpalettenspender
- 66: Pufferbahnen
- 68: Fördertechnik-Netzwerk

## Patentansprüche

1. Fahrzeug zum Kommissionieren von auf Entnahmepaletten (38) in einem Palettenregal (52) befindlichen Artikeln, das entlang der Pickfront des Palettenregals (52) verfahrbar ist und mit einer ersten Hubeinrichtung (14) mit einer höhenverstellbaren Picker-Trageinrichtung (26) für den Picker (18) und mit einer zweiten Hubeinrichtung (16) mit einer höhenverstellbaren Paletten-Trageinrichtung (28) für eine Auftragspalette (20) versehen ist, wobei die Picker-Trageinrichtung und die Paletten-Trageinrichtung relativ zur jeweiligen Entnahmeposition unabhängig voneinander in ihrer Höhe positionierbar sind, **dadurch gekennzeichnet, dass** die erste Hubeinrichtung (14) und die zweite Hubeinrichtung (16) separat voneinander an einer in Vertikalrichtung fixen Basis (12) des Fahrzeugs (10) angebracht sind.

2. Fahrzeug nach Anspruch 1, **dadurch gekennzeichnet, dass** aus Fahrzeug (10) an in Verfahrrichtung (A) gesehen einer Seite die erste Hubeinrichtung (14) und an der anderer Seite die zweite Hubeinrichtung (16) angeordnet ist.

3. Fahrzeug nach Anspruch 2, **dadurch gekennzeichnet, dass** jede Hubeinrichtung (14, 16) einen vertikalen Rahmen (22, 24) aufweist, an dem die jeweilige Trageinrichtung (26, 28) vertikal verfahrbar ist.

4. Fahrzeug nach einem der vorhergehenden Ansprüche, **dadurch gekennzeichnet, dass** die Picker-Trageinrichtung (26) und die Paletten-Trageinrichtung (28) in Draufsicht sich gegenüberliegend angeordnet sind.

5. Fahrzeug nach einem der vorhergehenden Ansprüche, **dadurch gekennzeichnet, dass** das Fahrzeug (10) schienengebunden ist.

6. Fahrzeug nach einem der vorhergehenden Ansprüche, **dadurch gekennzeichnet, dass** die Picker-Trageinrichtung (26) eine umlaufende Absturzsicherung (30) für den Picker aufweist.

7. Fahrzeug nach einer der vorhergehenden Ansprüche, **dadurch gekennzeichnet, dass** die Paletten-Trageinrichtung (28) oberhalb der Auftragspalette (20) ein Terminal (36) zur Anzeige der Pickpositionen aufweist.

8. Fahrzeug nach einem der vorhergehenden Ansprüche, **dadurch gekennzeichnet, dass** die Picker-Trageinrichtung (26) einen Totmann-Schalter (32) aufweist.

9. Fahrzeug nach Anspruch 8, **dadurch gekennzeichnet, dass** der Totmann-Schalter (32) zusätzlich zur Quittierung der Kommissionierung ausgebildet ist.

10. Fahrzeug nach einem der vorhergehenden Ansprüche, **dadurch gekennzeichnet, dass** die Paletten-Trageinrichtung (28) ein Lastaufnahmemittel (34) zum Aufnehmen und Abgeben der Auftragspalette (20) umfasst.

11. Fahrzeug nach Anspruch 10, **dadurch gekennzeichnet, dass** das Lastaufnahmemittel (34) so ausgebildet ist, dass ein Transport der Auftragspalette (20) quer zur Verfahrrichtung (A) des Fahrzeugs (10) ermöglicht wird.

12. Fahrzeug nach einem der vorhergehenden Ansprüche, **dadurch gekennzeichnet, dass** die Paletten-Trageinrichtung (28) eine Sensoreinrichtung zum Ermitteln des Füllgrades der Auftragspalette (20) aufweist.

13. Fahrzeug nach einem der vorhergehenden Ansprüche, **dadurch gekennzeichnet, dass** das Verfahren des Fahrzeugs (10) und der Hubeinrichtungen (14, 16) zu den jeweiligen Entnahmepositionen bzw. Übergabepositionen mittels eines Steuerrechners steuerbar ist.

14. Fahrzeug nach Anspruch 13, **dadurch gekennzeichnet, dass** die Höhe der Picker-Trageinrichtung (26) an der jeweiligen Entnahmeposition auf der Basis der Restbestandsmenge der Artikel auf der Entnahmepalette (38) steuerbar ist.

15. Fahrzeug nach Anspruch 13 oder 14, **dadurch gekennzeichnet, dass** die Höhe der Paletten-Trageinrichtung (28) an der jeweiligen Entnahmeposition auf der Basis des Füllgrades der Auftragspalette (20) steuerbar ist.

16. Fahrzeug nach Anspruch 14 oder 15, **dadurch gekennzeichnet, dass** die Höhe der Picker-Trageinrichtung (26) und/oder der Paletten-Trageinrichtung (28) an der jeweiligen Entnahmeposition für jeden Picker individuell um einen bestimmen Betrag korrigierbar ist.

17. Fahrzeug nach einem der Ansprüche 13 bis 16, **dadurch gekennzeichnet, dass** die von der Steuerung vorgegebenen Höhen vom Picker manuell korrigierbar sind.

18. Fahrzeug nach einem der vorhergehenden Ansprüche, **dadurch gekennzeichnet, dass** die Verfahrbewegung des Fahrzeugs (10) und die Hubbewegungen der Hubeinrichtungen (14, 16) gegebenenfalls gleichzeitig erfolgen.

19. Fahrzeug nach einem der vorhergehenden Ansprüche, **dadurch gekennzeichnet, dass** die Picker-Trageinrichtung (26) einen Steh-Sitz für den Picker aufweist.

20. Fahrzeug nach einem der vorhergehenden Ansprüche, **dadurch gekennzeichnet, dass** die Energieübertragung zum Fahrzeug über eine Schleifleitung erfolgt.

21. Fahrzeug nach einem der vorhergehenden Ansprüche, **dadurch gekennzeichnet, dass** die Datenübertragung zum Fahrzeug über Datenlichtschranken erfolgt.

## Claims

1. Vehicle for picking articles stored on picking pallets (38) in a pallet rack (52), which vehicle is drivable along the picking front of the pallet rack (52) and is provided with a first lifting gear (14) with a vertically adjustable picker-carrier (26) for the picker (18) and with a second lifting gear (16) with a vertically adjustable pallet-carrier (28) for an order pallet (20), the picker-carrier and the pallet-carrier being independently vertically positionable relative to a given picking position, **characterized in that** the first lifting gear (14) and the second lifting gear (16) are mounted separately from each other on a vertically fixed base (12) of the vehicle (10).

2. Vehicle according to Claim 1, **characterized in that** the first lifting gear (14) is arranged at one end of the vehicle and the second lifting gear (16) at the other end, when the vehicle is viewed in the direction of travel.

3. Vehicle according to Claim 2, **characterized in that** each lifting gear (14, 16) has a vertical frame (22, 24) on which the respective carrier (26, 28) is vertically movable.

4. Vehicle according to any one of the preceding claims, **characterized in that** the picker-carrier (26) and pallet-carrier (28) are arranged opposite each other, when viewed from above.

5. Vehicle according to any one of the preceding claims, **characterized in that** the vehicle (10) is rail-mounted.

6. Vehicle according to any one of the preceding claims, **characterized in that** the picker-carrier (26) has a surrounding safety cage (30) for the picker.

7. Vehicle according to any one of the preceding claims, **characterized in that** the pallet-carrier (28) has a terminal (36) above the order pallet (20) to display the picking positions.

8. Vehicle according to any one of the preceding claims, **characterized in that** the picker-carrier (26) has a dead man's switch (32).

9. Vehicle according to Claim 8, **characterized in that** the dead man's switch (32) is additionally configured to acknowledge the pick.

10. Vehicle according to any one of the preceding claims, **characterized in that** the pallet-carrier (28) has a load-handling device (34) to receive and discharge the order pallet (20).

11. Vehicle according to Claim 10, **characterized in that** the load-handling device (34) is configured to allow the order pallet (20) to be shifted transversely across the direction of travel (A) of the vehicle (10).

12. Vehicle according to any one of the preceding claims, **characterized in that** the pallet-carrier (28) has a sensor device to detect the fullness of the order pallet (20).

13. Vehicle according to any one of the preceding claims, **characterized in that** the travel of the vehicle (10) and its lifting gears (14, 16) to a given picking position or transfer position is controllable by means of a control computer.

14. Vehicle according to Claim 13, **characterized in that** the height of the picker-carrier (28) at a given picking position is controllable on the basis of the residual stock of articles on the picking pallet (38).

15. Vehicle according to Claim 13 or Claim 14, **characterized in that** the height of the pallet-carrier (28) at a given picking position is controllable on the basis of the fullness of the order pallet (20).

16. Vehicle according to Claim 14 or Claim 15, **characterized in that** the height of the picker-carrier (26) and/or pallet-carrier (28) at a given picking position is correctable by a specified amount for each individual picker.

17. Vehicle according to any one of Claims 13 to 16, **characterized in that** the heights set by the control system can be manually corrected by the picker.

18. Vehicle according to any one of the preceding claims, **characterized in that** the travel motion of the vehicle (10) and the vertical motions of the lifting gears (14, 16) may be simultaneous when required.

19. Vehicle according to any one of the preceding claims, **characterized in that** the picker-carrier (26) has a supported leaning position for the picker.

20. Vehicle according to any one of the preceding claims, **characterized in that** power transmission to the vehicle is via a contact conductor.

21. Vehicle according to any one of the preceding claims, **characterized in that** data transmission to the vehicle is via optical data couplers.

## Revendications

1. Chariot de rassemblage et de préparation d'articles se trouvant sur des palette à prélever (38), qui peut être déplacé le long de la face de sortie du rayonnage pour les palettes (52) et qui est doté d'un premier dispositif de levage (14) avec un dispositif porteur pour le manutentionneur (26) réglable en hauteur pour le manutentionneur (18) et d'un deuxième dispositif de levage (16) avec un dispositif porteur pour les palettes (28) réglable en hauteur pour une palette de la commande (20), dans lequel le dispositif porteur pour le manutentionneur et le dispositif porteur pour les palettes peuvent être positionnés en hauteur par rapport à la position de prélèvement respective indépendamment l'un de l'autre, **caractérisé en ce que** le premier dispositif de levage (14) et le deuxi è me dispositif de levage (16) sont disposés séparément l'un de l'autre sur une base (12) du chariot (10) fixe dans la direction verticale.

2. Chariot selon la revendication 1, **caractérisé en ce que** sur le chariot (10) est disposé d'un côté, vu dans la direction de roulage (A), le premier dispositif de levage (14), et de l'autre côté le deuxi è me dispositif de levage (16).

3. Chariot selon la revendication 2, **caractérisé en ce que** chaque dispositif de levage (14, 16) comporte un bâti (22, 24) vertical, sur lequel on peut déplacer verticalement le dispositif porteur (26, 28) respectif.

4. Chariot selon l'une quelconque des revendications précédentes, **caractérisé en ce que** le dispositif porteur pour le manutentionneur (26) et le dispositif porteur pour les palettes (28), vus de dessus, sont disposés l'un en face de l'autre.

5. Chariot selon l'une quelconque des revendications précédentes, **caractérisé en ce que** le chariot (10) est assujetti à des rails.

6. Chariot selon l'une quelconque des revendications précédentes, **caractérisé en ce que** le dispositif porteur pour le manutentionneur (26) comporte une protection périphérique contre les chutes (30) pour le manutentionneur.

7. Chariot selon l'une quelconque des revendications précédentes, **caractérisé en ce que** le dispositif porteur pour les palettes (28) comporte un terminal (36) au-dessus de la palette de la commande (20) pour l'affichage des positions de prélèvement.

8. Chariot selon l'une quelconque des revendications précédentes, **caractérisé en ce que** le dispositif porteur pour le manutentionneur (26) comporte un commutateur de l' homme mort (32).

9. Chariot selon la revendication 8, **caractérisé en ce que** le commutateur de l' homme mort (32) est configuré en plus pour l'acquittement du rassemblage et de la préparation.

10. Chariot selon l'une quelconque des revendications précédentes, **caractérisé en ce que** le dispositif porteur pour les palettes (28) comporte un moyen de prise des charges (34) pour la prise et la remise de la palette de la commande (20).

11. Chariot selon la revendication 10, **caractérisé en ce que** le moyen de prise des charges (34) est configuré de sorte à permettre un transport de la palette de la commande (20) transversalement à la direction de roulage (A).

12. Chariot selon l'une quelconque des revendications précédentes, **caractérisé en ce que** le dispositif porteur pour les palettes (28) comporte un système de détection pour la détermination du degré de remplissage de la palette de la commande (20).

13. Chariot selon l'une quelconque des revendications précédentes, **caractérisé en ce que** le roulage du chariot (10) et des dispositifs de levage (14, 16) aux différentes positions de prélèvement, respectivement de transfert peut être commandé au moyen d'un ordinateur de commande.

14. Chariot selon la revendication 13, **caractérisé en ce que** la hauteur du dispositif porteur pour le manutentionneur (26) à la position de prélèvement respective peut être commandée sur la base de la quantité des articles restant en stock sur la palette à prélever (38) .

15. Chariot selon la revendication 13 ou 14, **caractérisé en ce que** la hauteur du dispositif porteur pour les palettes (28) à la position de prélèvement respective peut être commandée sur la base du degré de remplissage de la palette de la commande (20).

16. Chariot selon la revendication 14 ou 15, **caractérisé en ce que** la hauteur du dispositif porteur pour le manutentionneur (26) et / ou du dispositif porteur pour les palettes (28) à la position de prélèvement respective peut être corrigée individuellement pour chaque manutentionneur d'une certaine valeur.

17. Chariot selon l'une quelconque des revendications 13 à 16, **caractérisé en ce que** les hauteurs données par la commande peuvent être corrigées manuellement par le manutentionneur.

18. Chariot selon l'une quelconque des revendications précédentes, **caractérisé en ce que** le mouvement de roulage du chariot (10) et les mouvements de levage des dispositifs de levage (14, 16) s'effectuent le cas échéant en même temps.

19. Chariot selon l'une quelconque des revendications précédentes, **caractérisé en ce que** le dispositif porteur pour le manutentionneur (26) comporte un appui fessier pour le manutentionneur.

20. Chariot selon l'une quelconque des revendications précédentes, **caractérisé en ce que** la transmission d'énergie au chariot s'effectue par une ligne de contact.

21. Chariot selon l'une quelconque des revendications précédentes, **caractérisé en ce que** la transmission des données au chariot s'effectue par des barrières optiques de données.
